# EUROPEAN PATENT SPECIFICATION

(11) **EP 2 216 715 B1**
(45) Date of publication and mention of the grant of the patent: **11.03.2015**
(21) Application number: 10005183.8
(22) Date of filing: 03.05.2002
(51) Int. Cl.: G06F 9/44, H04L 29/08, H04L 29/06, G06F 17/30

(54) **Method and computer system for restoring stateful favorites**
Verfahren und Computersystem zur Bereitstellung von zustandsbehafteten Favoriten
Procédé et système informatique pour fournir des favoris à états

(43) Date of publication of application: 11.08.2010
(62) Divisional of application: 09012644.2
(73) Proprietor: SAP SE, 69190 Walldorf (DE)
(72) Inventor: Stienhans, Frank, 69190 Walldorf (DE)
(74) Representative: Müller-Boré & Partner Patentanwälte PartG mbB

(56) References cited:
- US-A- 5 826 242
- DAVID LANE ET AL: "Web Database Applications with PHP & MySQL passage" WEB DATABASE APPLICATION WITH PHP AND MYSQL, XX, XX, 1 March 2002 (2002-03-01), pages 1-26, XP002283237
- SKONNARD A: "Client Persistence" MICROSOFT INTERNET DEVELOPER, [Online] December 1999 (1999-12), pages 1-12, XP007902999 Retrieved from the Internet: URL:http://www.microsoft.com/mind/1299/ins ide/inside1299.asp> [retrieved on 2007-09-21]

## Description

### Field of the Invention

The present invention generally relates to electronic data processing, and more particularly, relates to method, computer program product and system for improved user interaction.

### Background of the Invention

Favorites, as provided for example by conventional browsers, such as the Microsoft Internet explorer, are known by those skilled in the art. When a user accesses an application through a browser on a client, the user can use an "Add-Favorite"-function to add a representation (Favorite) of the application to a "Favorites-Menu" of the browser. Later on the user can use the representation to reload the application into the browser. If the application is a stateless application, in other words, if the current state of the application is available on the client, the current state of the application can be saved by the browser when the user adds the corresponding representation to the "Favorites-Menu". When the user returns to the application through the "Favorites-Menu", the state of the application is restored.

World Wide Web (WWW) concepts focus on stateless scenarios, where the client knows the complete state of the application. For many business related applications, stateless applications show insufficient performance because large amounts of data have to be transmitted from the server to the client to make all state information available on the client. Further, data traffic created by stateless business applications requires high-bandwidth communication lines between the server and the client. The "Add-Favorite"-function, as described above, does not support "Favorites" related to stateful applications, that is, applications that store the state on the server, where the application is running, rather than on the client.

Lane D., Williams H.E.: "Web Database Applications with PHP & MySQL" pages 1-26, XP 002283237 discloses stateless interaction between browsers and web servers using HTTP as a stateless protocol. The stateless nature of HTTP allows users to browse the web by following hypertext links and visiting pages in any order. To store an application state in a web browser, cookies are used. Rather than storing all the variables needed to maintain state and include them with each request, the browser stores a single session identifier that finds and initializes the variables stored on the server. By storing the state in the web server - the middle tier - the problem of increased request size should be solved and the state of an application should be protected from accidental or intentional changes a user might make.

Skonnard A.: "Client resistance", Microsoft Internet Developer, December 1999, XP7902999 describes how to manage user sessions for a web application on the client machine.

### Summary of the Invention

Therefore, it is an objective of the present invention to provide methods, computer program products and computer systems to provide client-side favorites in a browser, wherein the favorites relate to stateful applications.

To meet this objective, a method according to claim 1 is provided. Further embodiments of the present invention provide a computer system running computer programs to execute the methods.

It is an effect of the present invention that a stateful favorite for a stateful application on a server is defined by a client (for example through a user of the client) without the need of favorite-information to be stored on the server. Therefore, management of stateful favorites can be handled completely by the client without the risk of leaving obsolete favorite-information on the server when, for example, deleting a stateful favorite on the client.

It is a further effect of the present invention that the client does not need to store a complete session-state with the favorite in the browser to restore the session-state on the server. Because the session-state of a stateful application can reach several mega bytes in size, extracting mandatory information from the session-state saves bandwidth in the client-server communication and further saves memory for storing the favorite on the client.

It is a further effect of the present invention that a stateful application behaves like a stateless application when using a corresponding stateful favorite in the browser of the client. That is, when creating a stateful favorite, a reduced state of the stateful application is transmitted from the server to the client. When executing the stateful favorite the reduced state is transmitted to the server similar to a stateless application.

The aspects of the invention will be realized and attained by means of the elements and combinations particularly pointed out in the appended claims. It is to be understood that both, the foregoing general description and the following detailed description are exemplary and explanatory only and are not restrictive of the invention as described.

### Brief Description of the Drawings

- FIG. 1: illustrates a simplified block diagram of a computer system that can be used with an embodiment of the present invention;
- FIGS. 2A-2D: illustrate a graphical user-interface of a stateful application session at different time points;
- FIGS. 3A-3C: illustrate a client and a server when creating a stateful favorite in one embodiment of the present invention;
- FIG. 4: illustrates details of extracting a reduced state from a complete state;
- FIGS. 5A-5C: illustrate the client and the server when restoring a stateful application session in one embodiment of the present invention;
- FIG. 6: illustrates details of extending the reduced state to the complete state; and
- FIGS. 7A-7C: illustrate simplified flow charts of methods to handle stateful favorites according to the present invention.

### Detailed Description of the Invention

Wherever possible, the same reference numbers will be used throughout the drawings to refer to the same or like parts. For convenience of explanation a list of references is provided prior to the claims.

Definitions of terms, as used hereinafter:
client:
   client computer in a computer system.
server:
   server computer in the computer system.
session:
   a session is an application instance running on a server for a specific user.
session-state:
   a session-state includes session dependent information, such as identifiers of objects used by an application. The session dependent information provides an environment to run an application instance of the application on a server. For convenience of explanation the "session-state" is referred to as "state", hereinafter.
reduced state:
   portion of a state that allows to restore the complete state of a session.
stateful application:
   a stateful application holds its state on the server, where the corresponding application instance is running.
stateless application:
   a stateless application does not hold its state on the server, where the corresponding application instance is running. The complete state of a stateless application is hold on the client side.
stateful favorite:
   a stateful favorite is a shortcut to an application, that can be used by a user to restore a state of a session on a server by launching the stateful favorite from the client. Stateful favorites can have a long lifetime and typically are valid even after a session ends. For convenience of explanation, "stateful favorites" are referred to as "favorites", hereinafter. Favorites can be included in the "Favorites-Menu" of a browser or made available as a shortcut on the client (e.g. via an icon or a specific key-sequence).
serialize:
   serialize, as used hereinafter, means transforming data into a serialized data format.

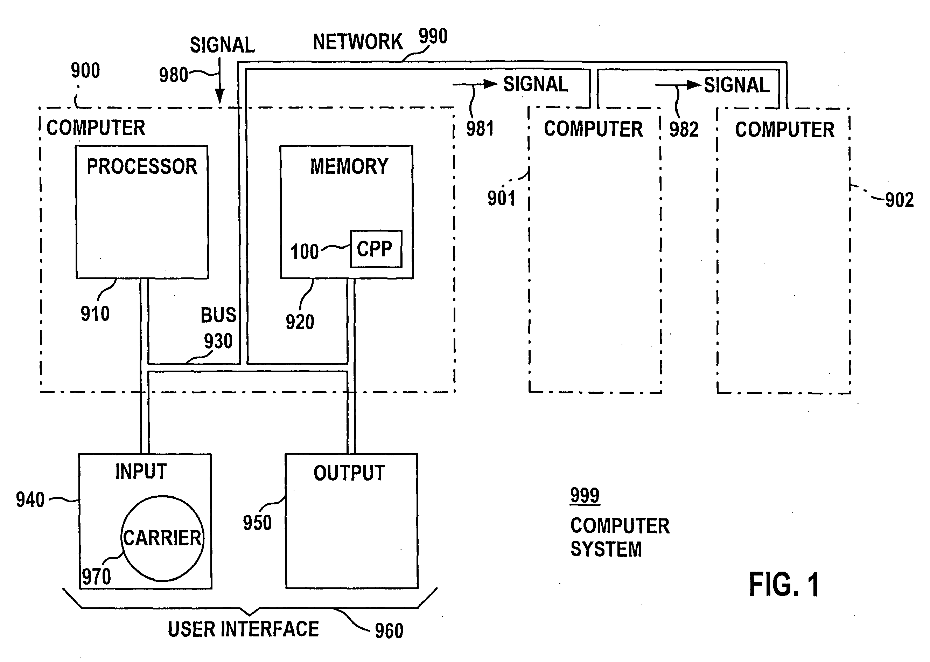

FIG. 1 illustrates a simplified block diagram of an exemplary computer system, that implements embodiments of the present invention. Computer system 999 includes computer 900 and has a plurality of further computers 901, 902 (or 90q, with q=0...Q-1, Q any number).

Computer 900 can be connected to further computers 901, 902 via computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, such as a hard disk, a floppy disk, or other magnetic disk, a tape, a cassette tape; (b) optical media, such as optical disk (CD-ROM, digital versatile disk - DVD); (c) semiconductor media, such as DRAM, SRAM, EPROM, EEPROM, memory stick, or by any other media, such as paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, such as Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

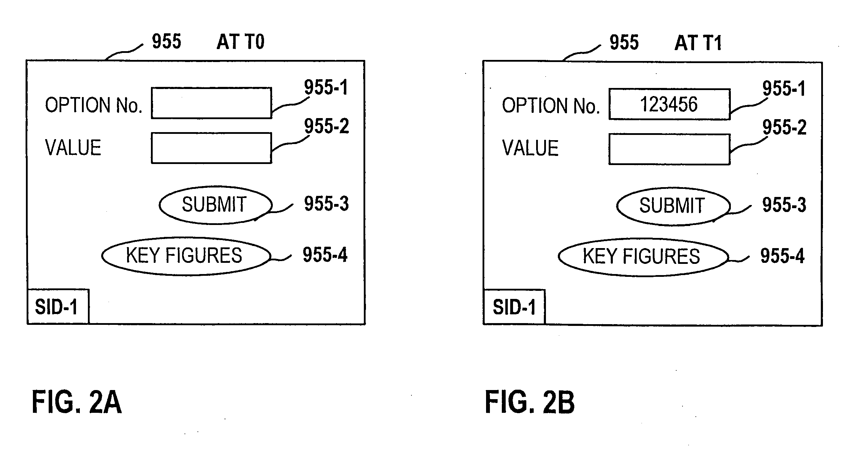

FIGS. 2A-2D illustrate graphical user-interface 955 of a stateful application session at different time points T0, T1, T2 and T3. The following scenario describes the interaction of a user with a financial application via graphical user-interface 955. The scenario will be used as an example of one embodiment of the present invention. The present invention can be implemented in alternative embodiments for other applications. Examples for other applications are applications in the field of logistics, human capital management, customer relationship management, product life cycle management or any other application that is used by the user in a business or administrative context.

At T0 (cf. FIG. 2A), the user gets prompted with graphical user-interface 955 (GUI). For example, the user interacts with computer system 999 via user-interface 960 (cf. FIG. 1) of client 900 (cf. FIG. 1) . GUI 955 is presented to the user via output device 950 (e.g. a display device such as a monitor or a PDA display) in a conventional browser. In the example, FIG. 2A illustrates the initial screen of a financial application session (also referred to as application session, hereinafter) that allows the user to query the value of a stock option. The initial screen has first screen identifier SID-1. The financial application session is running on a server, such as server 901 (cf. FIG. 1) in computer system 999. Server 901 stores the state of the session. GUI 955 includes components 955-1 to 955-4. OPTION No. component 955-1 is an entry field where the user indicates a number that identifies the option whose value is to be retrieved. VALUE component 955-2 is an output field where the retrieved option value is presented to the user. When the user starts the application session, for example by clicking on a corresponding menu entry in an application menu or on a corresponding shortcut or hyperlink on output device 950, components 955-1 and 955-2 are empty. This information is included in the state. The screen identifier SID-1 is also included in the state. SUBMIT component 955-3 and KEY FIGURES component 955-4 are components are used by the user to launch requests to the application session on server 901. For example, components 955-3, 955-4 are implemented in GUI 955 as push-buttons, shortcuts, menu entries or the like.

At T1 (cf. FIG. 2B), the user has entered a number, such as "123456", into OPTION No. 955-1. The state of the application session now includes the value "123456" of OPTION No. component 955-1. The screen identifier is still SID-1 because the layout of the screen has not changed. The user then uses SUBMIT component 955-3 to trigger the retrieval of the option value.

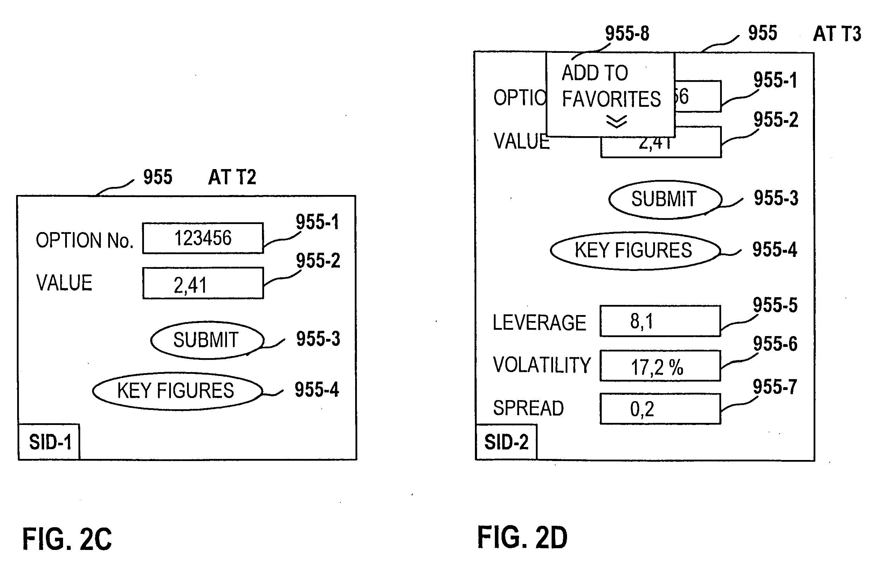

At T2 (cf. FIG. 2C), server 901 has retrieved the option value "2,41", which is presented to the user via VALUE component 955-2. The screen that is used to present the option value is still the screen with first screen identifier SID-1. The state of the application session now further includes the value "2,41" of VALUE component 955-2. The user uses KEY FIGURES component 955-4 to launch a request for information that further specifies option No. "123456"

At T3 (cf. FIG. 2D), server 901 has retrieved key figure values for the leverage ("8,1"), volatility ("17,2%") and spread ("0,2") of the option. The key figure values are presented to the user in LEVERAGE component 955-5, VOLATILTIY component 955-6 and SPREAD component 955-7, respectively. These components were added to GUI 955 as a result of the interaction of the user with the KEY-FIGURES component 955-4 at T2. For example, this is achieved by replacing the screen with having first screen identifier SID-1 with a further screen having second screen identifier SID-2. Therefore, the state at T3 further includes the additional components 955-5, 955-6, 955-7 and their key figure values as well as second screen identifier SID-2. In this example the user is mainly interested in the analysis of option no. "123456" because he/she is interested in buying or selling the option at the right time. Therefore, the user wants to add a new favorite-entry to the browser's "Favorites-Menu" so that, when executing the new favorite-entry, the application session as of T3 is restored and presents up-to-date values to the user. For example to achieve this, the user selects "ADD TO FAVORITES" from menu component 955-8. For example, the menu component 955-8 is part of the browser. In alternative embodiments, the user can select a corresponding button, shortcut or the like. Preferably, the user gives a name, such as "option 123456", to the new favorite-entry, which can be used later on to identify the new favorite-entry.

Client 900 then creates the new favorite-entry that stores a reduced state of the application session as of T3. The reduced state includes all information about the application session that is needed by server 901 to restore the application session at a later point in time. Therefore, the new favorite-entry is a stateful favorite according to an embodiment of the present invention. For example, restoring the application session is triggered when the user selects the new favorite-entry in the "Favorites-Menu" or when the user executes a corresponding shortcut or link.

The following figures explain further details of embodiments of the present invention with regards to the creation of the stateful favorite on client 900.

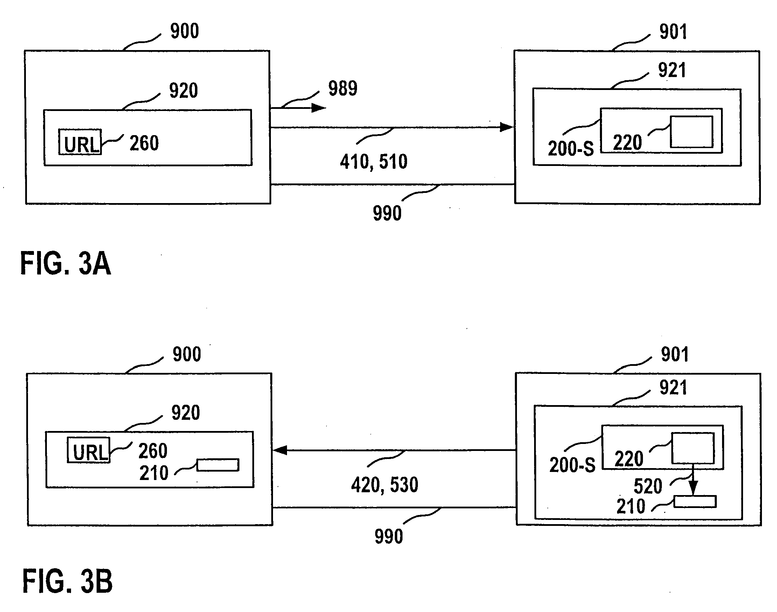

FIGS. 3A-3C illustrate client 900 and server 901 when creating stateful favorite 250 in one embodiment of the present invention. As described in FIG. 1, client 900 has memory 920 and server 901 has memory 921. Client 900 and server 901 communicate via network 990. When a first computer (e.g. client 900) sends data (e.g. reduced state 210) to a second computer (e.g. server 901) in computer system 999 (cf. FIG. 1), actually a copy of the data is sent and the original data still exists on the first computer. For convenience of explanation, the same reference number is used for the original data and the sent copy.

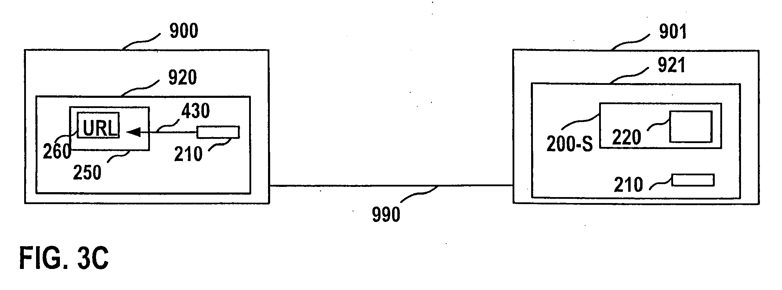

In the example of FIG. 3A, client 900 serves to access application session 200-S that is running on server 901 via URL 260. Application session 200-S is an instance of a stateful application. Therefore, complete state 200 of application session 200-S is stored in memory 921 of server 901. Referring back to the scenario of FIG. 2D, at T3, the user decides to create stateful favorite 250 (cf. FIG. 3C) on client 900. When selecting the "ADD TO FAVORITES" function, client 900 sends 410 request 989. Server 901 receives 510 request 981. Request 989 requests server 901 to send reduced state 210 of application session 200-S to client 900.

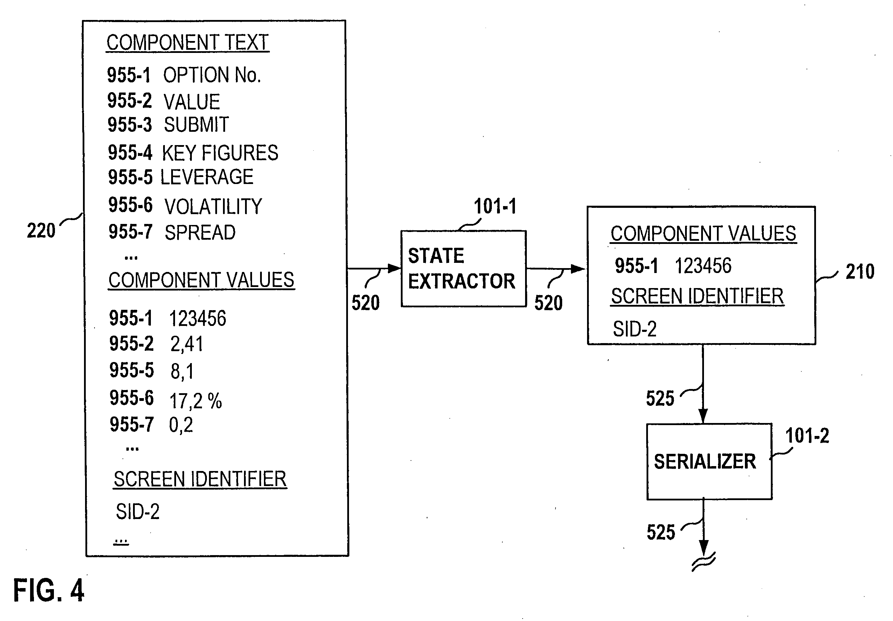

In FIG. 3B, server 901 extracts 520 reduced state 210 from complete state 220. In one embodiment of the present invention, extracting 520 includes the selection of relevant data of complete state 220 and the serialization of the relevant data. In another embodiment, complete state 220 is serialized and the selection of relevant data is performed using the serialized data of complete state 220. Details of the extracting 520 step are explained in FIG. 4. Server 901 then sends reduced state 210 to client 900. Upon having received 420 reduced state 210, reduced state 210 is available in memory 920. In other words, stateful application session 200-S behaves similar to a stateless application session. It is an effect of the present invention that the user does not recognize whether he/she is working with a stateless or stateful application. This results in low training efforts for the user. However, a stateless application session always makes its complete state available at client 900, whereas stateful application session 200-S makes reduced state 210 available, when it is requested by client 900. Reduced state 210 includes all information that is required by server 901 to restore application session 200-S at a later point in time.

In FIG. 3C, client 900 creates stateful favorite 250 in memory 900. For example, stateful favorite 250 can be created via the user selecting "ADD TO FAVORITES" or via dragging the URL 260 that corresponds to application session 200-S to, for example, the desktop. The URL is typically displayed in the browser. Alternative embodiments for creating stateful favorite 250 are creating a shortcut on the desktop or using a hyperlink to access the "ADD TO FAVORITES" function. That is, stateful favorite 250 can have various visual representations (e.g. menu entry, shortcut, icon, hyperlink, etc.). For example, the user or computer system 999 assigns a title to stateful favorite 250 and client 900 stores 430 reduced state 210 as a portion of stateful favorite 250. For example, stateful favorite is stored as file where the file name corresponds to the title of stateful favorite 250. Preferably, reduced state 210 is included in the file. For example, URL 260 is also included in the file.

By sending reduced state 210 instead of complete state 220 to client 900, less bandwidth is required from the client-server communication via network 990.

According to the invention reduced state 210 is sent from sever 901 to client 900 when requested. Referring back to the example of FIG. 2, a stateless application session on server 901 would transfer its current state to client 900 at each time point T0 to T3. According to an embodiment of the present invention, complete state 220 of application session 200-S is stored in memory 921 of server 901. Sending reduced state 210 to client 900 on request 989 saves further bandwidth.

According to the invention stateful favorite 250 is administrated on client 900. That is, when the user decides to delete a stateful favorite from memory 900, there is no need to notify the server, because server 901 has no knowledge of the stateful favorite on client 900.

FIG. 4 illustrates details of extracting 520 reduced state 210 from complete state 220.

Referring back to the example of FIG. 2D, at T3, complete state 220 includes information about the text of each component as illustrated in section COMPONENT TEXT. It further includes information about the value of each component as illustrated in section COMPONENT VALUE. It further includes information about the screen identifier as illustrated in section SCREEN IDENTIFIER. Further sections illustrated by ... can be included in complete state 220 to store, for example, the current position of a cursor or of a scroll bar or any other element that specifies the appearance of GUI 955 at T3.

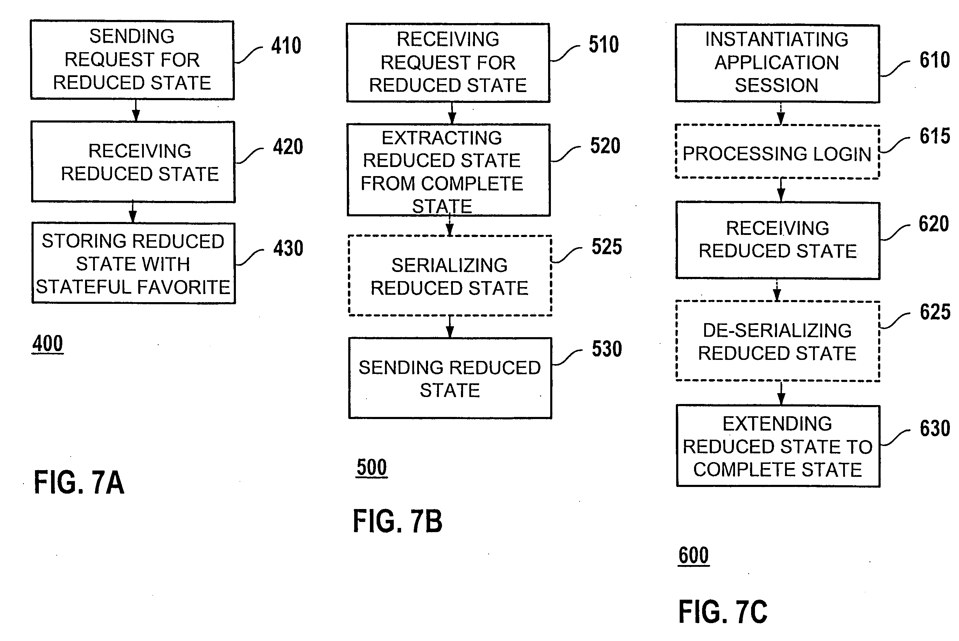

In one embodiment of the present invention, state extractor 101-1 extracts 520 reduced state 210 from complete state 220. For example, state extractor 101-1 is a portion of computer program product 101 (cf. FIG. 1) running on server 901 to execute method 500 (cf. FIG. 7).

In the example of FIG. 2D, the information that is needed from complete state 220 to restore application session 200-S as of T3 is the value "123456" of the option number 955-1 in section COMPONENT VALUE of complete state 220 and the screen identifier SID-2 in section SCREEN IDENTIFIER of complete state 220. In the example, all texts in complete state's section COMPONENT TEXT and their corresponding display locations on the screen as well as the display locations of the values in section COMPONENT VALUE are defined on the screen having screen identifier SID-2. The values in section COMPONENT VALUE are refreshed automatically when restoring application session 200-S for option number "123456". Therefore, the value "123456" of the option number 955-1 in section COMPONENT VALUE of complete state 220 and the screen identifier SID-2 in section SCREEN IDENTIFIER of complete state 220 are included in the corresponding sections of reduced state 210. Therefore, state extractor 101-1 can be considered as an intelligent filter of state information. In one embodiment of the present invention, state extractor 101-1 has information about the programming model of application 200 and, therefore, knows which information of a complete state of a specific application screen is essential to restore the specific application session at a later point in time. In another embodiment, state-extractor can use the object model of application 200 or any other property of application 200 that identifies data representing essential information for restoring application session 200-S. At least all the essential information is included in the corresponding reduced state.

In one embodiment of the present invention, server 901 serializes 531 reduced state 210 before sending 530 (cf. FIG. 3B) reduced state 210 to client 900. For example, serializing 531 is performed by serializer 101-2, which is an optional portion of computer program product 101.

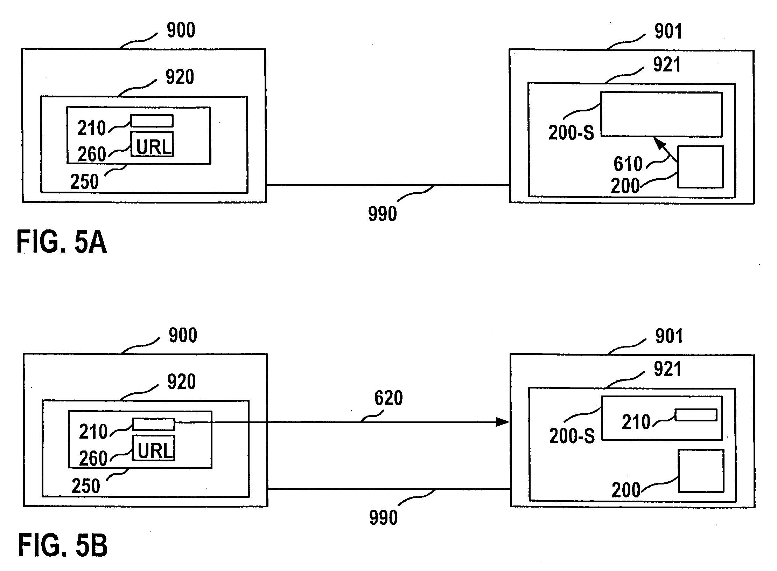

FIGS. 5A-5C illustrate client 900 and server 901 when restoring application session 200-S in one embodiment of the present invention.

In FIG. 5A, the user selects and executes stateful favorite 250, for example by clicking on the corresponding entry in the "Favorites-Menu" of the browser on client 900 or by using one of the other representations of stateful favorite 250 that are described under FIG. 3C. Client 900 sends URL 260 to server 901. Server 901 the instantiates 610 application session 200-S in memory 921 from stateful application 200, which is also stored in server memory 921 in the example. Stateful application 200 can be stored in any storage device of computer system 999 (cf. FIG. 1) . In the example, no instance (application session) of application 200 that corresponds to reduced state 210 is running on server 901 at the time when reduced state 210 is received from client 900. In case a corresponding instance (session) is already running on server 901, the instance can be replaced or a further instance can be instantiated. In one embodiment of the present invention, server 901 can prompt the user with a logon screen via client 900 if application session 200-S requires user authentication. Upon the user having logged on, server 901 continues to restore application session 200-S. If stateful application 200 supports single sign on functionality that is known by those skilled in the art the logon and authentication can be performed in the background without notifying the user.

In FIG. 5B, server 901 receives 620 reduced state 210 from client 900. Reduced state 210 is loaded into application session 200-S. In one embodiment of the present invention reduced state 210 is received as serialized data. Server 901 de-serializes the serialized data.

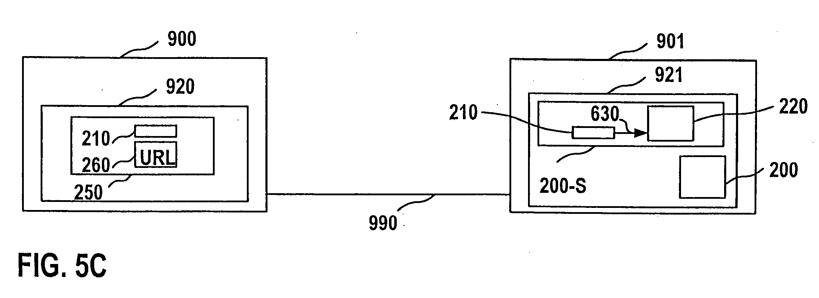

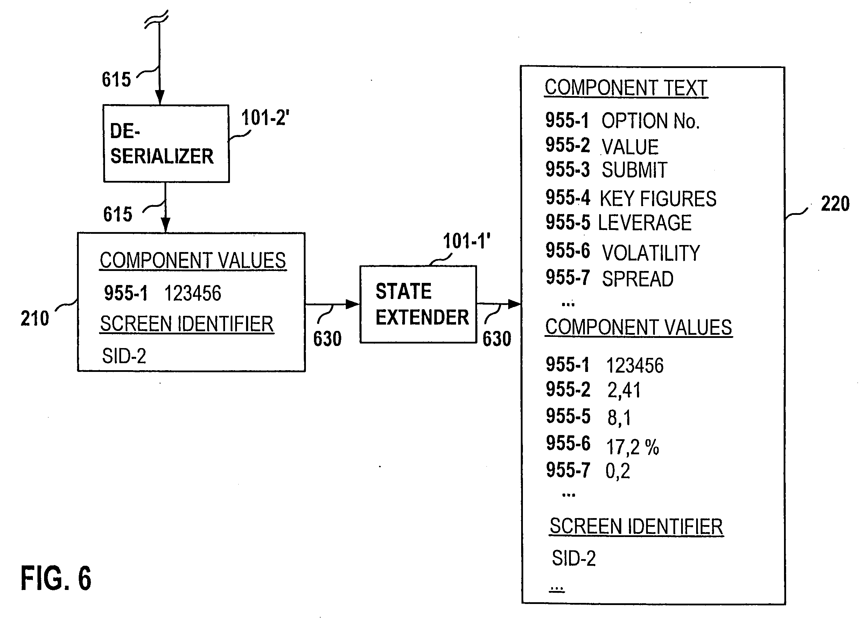

In FIG. 5C, server 901 extends 630 reduced state 210 into complete state 220 of application session 220-S. For example, this can be achieved by executing URL 260 with parameters that are included in reduced state 210. At this time, application session 200-S is fully restored on server 901. Details of the extending 630 step are explained in FIG. 6.

FIG. 6 illustrates details of extending 620 reduced state 210 to complete state 220.

In the example of FIG. 2D, the information that is needed from complete state 220 to restore application session 200-S as of T3 is the value "123456" of the option number 955-1 in section COMPONENT VALUE of complete state 220 and the screen identifier SID-2 in section SCREEN IDENTIFIER of complete state 220.

In one embodiment of the present invention, state extender 101-1' extends 620 reduced state 210 into complete state 220. For example, state extender 101-1' is a portion of a further computer program product 101' (cf. FIG. 1) running on server 901 to execute method 600 (cf. FIG. 7). For example, state extender 101-1' executes the application corresponding to URL 260 (cf. FIG. 5C) in application session 200-S (cf. FIG. 5C) by using the values that are included in reduced state 210 as input parameters for the application. In the example, the same values as of T3 (cf. FIG. 2D) are retrieved by the application and loaded into complete state 220 in the corresponding sections COMPONENT TEXT, COMPONENT VALUE, SCREEN IDENTIFIER an further sections

In case, for example, the values for components 955-1, 955-2, 955-6 or 955-7 have changed since T3, the current values can be loaded into complete state 220.

In one embodiment of the present invention, server 901 de-serializes 615 reduced state 210 when receiving reduced state 210 from client 900 in a serialized data format. For example, de-serializing 615 is performed by de-serializer 101-2', which is an optional portion of computer program product 101'.

FIGS. 7A-7C illustrate simplified flow charts of methods 400, 500 and 600 to handle stateful favorites according to the present invention. Preferably, method 400 is executed by client 900 but can be executed by any other client in computer system 999 (cf. FIG. 1). For example, computer program product 100 (cf. FIG. 1) includes instructions that cause processor 910 (cf. FIG. 1) of client 900 to execute the steps of method 400. Method 400 is referred to as client method 400 in the following description. Preferably, methods 500, 600 are executed by server 901 but can be executed by any other server in computer system 999. For example, computer program product 101 (cf. FIG. 1) includes instructions that cause processor 911 (cf. FIG. 1) of server 901 to execute the steps of method 500. Method 500 is referred to as first server method 500 in the following description. For example, computer program product 101' (cf. FIG. 1) includes instructions that cause processor 911 (cf. FIG. 1) of server 901 to execute the steps of method 600. Method 600 is referred to as second server method 600 in the following description.

As shown in FIG. 7A, client method 400 for creating stateful favorite 250 on client 900 includes the following steps:
Sending 410 request 989 for reduced state 210 of stateful application session 200-S from client 900 to server 901.
Receiving 420 at client 900 reduced state 210 from server 901.
Storing 430 reduced state 210 as a portion of stateful favorite 250.

Preferably, in the receiving 420 step reduced state 210 has a serialized data format.

FIG. 7B shows a simplified flow chart of first server method 500 for providing reduced state 210 of stateful application session 200-S, wherein stateful application session 200-S has complete state 220 on server 900. First server method 500 includes the following steps:
Receiving 510 at server 901 request 989 for reduced state 210 from client 900.
Extracting 520 reduced state 210 from complete state 220.
Sending 530 reduced state 210 to client 900.

Preferably, server 901 sends reduced state 210 in a serialized data format. Therefore, optionally, server 901 serializes 525 reduced state 210 before sending 530.

FIG. 7C shows a simplified flow chart of second server method 600 for restoring stateful application session 200-S on server 901. Second server method 600 includes the following steps:
Instantiating 610 on server 901 stateful application session 200-S that corresponds to stateful favorite 250 on client 900.
Receiving 620 reduced state 210 of stateful application session 200-S on server 901, wherein reduced state 210 is a portion of stateful favorite 250 on client 900.
Extending 630 reduced state 210 to complete state 220 of stateful application session 200-S.

In one embodiment, reduced state 210 is received by server 901 in a serialized data format and optionally, server 901 de-serializes 625 reduced state 210 before extending 620.

In another embodiment of the present invention, optionally, server 901 processes 615 a logon of the user to authenticate the user. Logon procedures to authenticate a user are known by those skilled in the art.

The following coding section 1 provides a Java Script example of client-side coding that can be used on client 900 (cf. FIG. 1). Coding section 1 can be a part of an HTML-page on client 900, wherein the HTML-page represents application session 200-S running on server 901. Those skilled in the art can use coding section 1 to enable client method 400 and server methods 500, 600. A double asterisk (**) is used to indicate the start/end of comment sections in coding section 1 to explain a previous portion of the coding example for those skilled in the art.

### Coding section 1:

```
<STYLE>.sFavorite { BEHAVIOR:
                url(#default#savefavorite)} </STYLE>
                ** declaration for using a browser feature to locally
                save browser favorite data **
                <SCRIPT>
  function getReducedState()
  {
   var xmlhttp = new ActiveXObject("Msxml2.XMLHTTP");
   xmlhttp.Open("GET", location.href +
                              "?favorite=yes", false);
   xmlhttp.Send();
   return xmlhttp.responseXML;
  }
  ** getReducedState() requests reduced state 210 in an
  XML format from server 901 ** DOM
 function fnSaveReducedState()
  {
   var data=getReducedState();
   myForm.FavoriteStateControl.setAttribute
                            ("sReducedState",data.xml);
 }
 ** fnSaveReducedState() loads reduced state 210 into
 the variable data and stores data as attribute
 "sReducedState" of stateful favorite 250
 ("myForm.FavoriteState Control") **
 function fnSubmitReducedState()
 {
   myForm.FavoriteStateControl.value=
   myForm.FavoriteStateControl.getAttribute
                                     ("sReducedState");
    myForm.submit();
  }
  ** fnSubmitReducedState() retrieves reduced state 210
  from stateful favorite 250 and sends reduced state 210
  to server 901 to restore application session 200-S **
  </SCRIPT>
  <input id="FavoriteStateControl" class="sFavorite"
  type="hidden" onload="fnSubmitReducedState()"
  onsave="fnSaveReducedState()">
  ** input field (that is hidden in the example but can
  be visible) that restores application session 200-S
  when stateful favorite 250 is executed (onload) and
  that saves reduced state 210 with stateful favorite 250
  when, for example, storing stateful favorite 250
  (onsave). **
```

| **Reference** | **Description** |
|---|---|
| 100/101/101' | Computer program product |
| 200 | Stateful application |
| 200-S | Stateful application session /instance |
| 210 | Reduced state |
| 220 | Complete state |
| 250 | Stateful favorite |
| 260 | Unique resource locator (URL) |
| 400, 500, 600 | Method |
| 4xx, 5xx, 6xx | Method steps |
| 999 | computer network system |
| 900, 901, 902 | Computers |
| 910, 911, 912 | Processors |
| 920, 921, 922 | Memories |
| 940 | Input device |
| 950 | Output device |
| 955 | Graphical user interface (GUI) |
| 955-x | GUI components |
| 960 | User interface |
| 970 | Program carrier (computer readable device) |
| 980 | Program signal |

### Reference numbers

The present invention may also relate to a method (400) for creating a stateful favorite (250) on a client (900) comprising:
sending (410) from the client (900) to a server (901) a request (989) for a reduced state (210) of a stateful application session (200-S);
receiving (420) at the client (900) the reduced state (210) from the server (901); and
storing (430) the reduced state (210) as a portion of the stateful favorite (250).

Further, in the receiving (420) step the reduced state (210) could be received in a serialized data format.

The stateful favorite (210) may have a visual representation selected from the group of menu entry, shortcut, icon and hyperlink.

Moreover, the stateful favorite (250) could further comprise a title and a unique resource locator (260) that corresponds to the stateful application session (200-S).

In another aspect, the present invention may also relate to a method (600) for restoring a stateful application session (200-S) on a server (901) comprising:
instantiating (610) on the server (901) the stateful application session (200-S) that corresponds to a stateful favorite (250) on a client (900);
receiving (620) on the server (901) a reduced state (210) of the stateful application session (200-S), wherein the reduced state (210) is a portion of the stateful favorite (250) on the client (900); and
extending (630) the reduced state (210) to a complete state (220) of the stateful application session (200-S).

The method (600) may comprise:
processing (615) a logon of a user.

The reduced state (210) could be received in a serialized data format and the method (600) could comprise the further step:
de-serializing (625) of the reduced state (210).

In a further aspect, the present invention may also relate to a method (500) for providing a reduced state (210) of a stateful application session (200-S), wherein the stateful application session (200-S) has a complete state (220) on a server (901), comprising:
receiving (510) at the server (901) a request (989) for the reduced state (210) from a client (900);
extracting (520) the reduced state (210) from the complete state (220) ; and
sending (530) the reduced state (210) to the client (900).

The method (500) may comprise the further step:
serializing (525) the reduced state (210).

In another aspect, the present invention could further relate to a computer program product (100) for creating a stateful favorite (250) on a client (900), wherein the computer program product (100) comprises a plurality of instructions causing a processor (910) of the client (900) to execute any of the steps of the method (400).

Moreover, the present invention may also relate to a computer program product (101) for providing a reduced state (210) of a stateful application session (200-S) on a server (901), wherein the computer program product (101) comprises a plurality of instructions causing a processor (911) of the server (901) to execute any of the steps of the method (500).

In a further aspect, the present invention may also relate to a computer program product (101') for restoring a stateful application session (200-S) on a server (901), wherein the computer program product (101') comprises a plurality of instructions causing a processor (911) of the server (901) to execute any of the steps of the method (600).

In another aspect, the present invention may also relate to a computer program product (101) for providing a reduced state (210) of a stateful application session (200-S) on a server (901), wherein the computer program product (101) comprises:
a state extractor (101-1) having a plurality of instructions causing a processor (911) of the server (901) to extract (520) the reduced state (210) from a complete state (220) of the stateful application session (200-S), wherein the server (901) sends (530) the reduced state (210) to a client (900).

The computer program product (101) could further comprise:
a serializer (101-1) having a plurality of instructions causing the processor (911) of the server (901) to serialize (525) the reduced state (210) before sending (530).

Moreover, the present invention could also relate to a computer program product (101') for restoring a stateful application session (200-S) on a server (901), wherein the computer program product (101') comprises:
a state extender (101-1') having a plurality of instructions causing a processor (911) of the server (901) to extend (630) a reduced state (210) of the stateful application session (200-S) to a complete state (220) of the stateful application session (200-S), wherein the server (901) instantiates (610) the stateful application session (200-S) that corresponds to a stateful favorite (250) on a client (900) and wherein the reduced state (210) is a portion of the stateful favorite (250) on the client (900).

The computer program product (101') could further comprise:
a de-serializer (101-2') having a plurality of instructions causing a processor (911) of the server (901) to de-serializing (625) the reduced state (210) when received (620) from the client (900).

In a further aspect, the present invention may also relate to a client (900) in a computer system (999) for creating a stateful favorite (250) on the client (900); the client (900) running a computer program (100) for executing the following steps:
sending (410) from the client (900) to a server (901) a request (989) for a reduced state (210) of a stateful application session (200-S);
receiving (420) at the client (900) the reduced state (210) from the server (901); and
storing (430) the reduced state (210) as a portion of the stateful favorite (250).

The receiving (420) step could receive the reduced state (210) in a serialized data format.

The stateful favorite (210) may have a visual representation selected from the group of menu entry, shortcut, icon and hyperlink.

The stateful favorite (250) could further comprise a title and a unique resource locator (260) that corresponds to the stateful application session (200-S).

In another aspect, the present invention could further relate to a server (901) for restoring a stateful application session (200-S); the server running a computer program (101') for executing the following steps:
instantiating (610) on the server (901) the stateful application session (200-S) that corresponds to a stateful favorite (250) on a client (900);
receiving (620) on the server (901) a reduced state (210) of the stateful application session (200-S), wherein the reduced state (210) is a portion of the stateful favorite (250) on the client (900); and
extending (630) the reduced state (210) to a complete state (220) of the stateful application session (200-S).

The server (901) running the computer program (101') could execute the further step: processing (615) a logon of a user.

The reduced state (210) may be received in a serialized data format and the server (901), when running the computer program (101'), executes the further step:
de-serializing (625) of the reduced state (210).

## Claims

1. A method (600) for restoring a stateful application session (200-S) on a server (901) comprising:
storing a reduced state of the stateful application session (200-S) on a client (900), the reduced state being a portion of a complete state of an application session that allows to restore the complete state of the application session;
instantiating (610) on the server (901) the stateful application session (200-S) that corresponds to a stateful favorite (250) administrated on a client (900);
sending a request for a reduced state (210) from a web-browser running on the client (900) to the server (901);
receiving (620), from the web-browser running on the client, on the server (901) the reduced state (210) of the stateful application session (200-S);
extending (630) the reduced state (210) at the server (901) to the complete state (220) of the stateful application session (200-S);
extracting the reduced state (210) at the server (901) from a complete state stored on the server, wherein extracting includes the selection of relevant data of the complete state using a state extractor which has information about the programming model of application such that it knows which information of a complete state of a specific application screen is essential to restore the specific application session at a later point in time; and
storing the reduced state (210) as a portion of the stateful favorite (250) on the client (900).

2. The method (600) of claim 1, comprising:
processing (615) a logon of a user.

3. The method (600) of claims 1 or 2, wherein the reduced state (210) is received in a serialized data format and the method (600) comprises the further step:
de-serializing (625) of the reduced state (210).

4. A computer program product (101') for restoring a stateful application session (200-S), wherein the computer program product (101') comprises a plurality of instructions causing processors (911) of a server (901) or the client (900) to execute any of the steps of claims 1, 2 or 3.

5. The computer program product (101') of claim 4 further comprising:
a de-serializer (101-2') having a plurality of instructions causing a processor (911) of the server (901) to de-serializing (625) the reduced state (210) when received (620) from the client (900).

6. A computer system for restoring a stateful application session (200-S), said computer system comprising a server (901) and a client (900);
the client running a computer program for
storing a reduced state of the stateful application session (200-S) on the client (900), the reduced state being a portion of a complete state of an application session that allows to restore the complete state of the application session; and
storing the reduced state (210) as a portion of a stateful favorite (250) on the client (900);
the server running a computer program (101') for executing the following steps:
instantiating (610) on the server (901) the stateful application session (200-S) that corresponds to the stateful favorite (250) on a client (900) ;
receiving (620), from the web-browser running on the client, on the server (901) the reduced state (210) of the stateful application session (200-S);
extracting the reduced state from a complete state stored on the server, wherein extracting includes the selection of relevant data of the complete state using a state extractor which has information about the programming model of application such that it knows which information of a complete state of a specific application screen is essential to restore the specific application session at a later point in time; and
extending (630) the reduced state (210) to a complete state (220) of the stateful application session (200-S).

7. The computer system of claim 6, wherein said server (901) runs the computer program (101') for executing the further step:
processing (615) a logon of a user.

8. The computer system of claim 6, wherein the reduced state (210) is received in a serialized data format and the server (901), when running the computer program (101'), executes the further step:
de-serializing (625) of the reduced state (210).

## Patentansprüche

1. Verfahren (600) zum Wiederherstellen einer zustandsbehafteten bzw. -bezogenen Anwendungssitzung (200-S) auf einem Server (901), umfassend:
Speichern eines reduzierten Zustands der zustandsbehafteten Anwendungssitzung (200-S) auf einem Client (900), wobei der reduzierte Zustand ein Teil eines kompletten Zustands einer Anwendungssitzung ist, der es erlaubt, den kompletten Zustand der Anwendungssitzung wiederherzustellen;
Instanziieren (610), auf dem Server (901), der zustandsbehafteten Anwendungssitzung (200-S), die einem zustandbehafteten bzw. -bezogenen Favoriten (250) entspricht, der auf einem Client (900) verwaltet wird;
Senden einer Anfrage nach einem reduzierten Zustand (210) von einem Web-Browser, der auf dem Client (900) läuft, an den Server (901);
Empfangen (620), von dem Web-Browser, der auf dem Client läuft, auf dem Server (901) des reduzierten Zustands (210) der zustandsbehafteten Anwendungssitzung (200-S);
Erweitern (630) des reduzierten Zustands (210) an dem Server (901) auf den kompletten Zustand (220) der zustandsbehafteten Anwendungssitzung (200-S);
Extrahieren des reduzierten Zustands (210) an dem Server (901) aus einem kompletten Zustand, der auf dem Server gespeichert ist, wobei das Extrahieren die Auswahl von relevanten Daten des kompletten Zustands unter Verwendung eines Zustandsextraktors beinhaltet, der Informationen über das Programmiermodell der Anwendung aufweist, so dass er weiß, welche Informationen eines kompletten Zustands eines spezifischen Anwendungsbildschirms wesentlich sind, um die spezifische Anwendungssitzung zu einem späteren Zeitpunkt wiederherzustellen; und
Speichern des reduzierten Zustands (210) als einen Teil des zustandsbehafteten Favoriten (250) auf dem Client (900).

2. Verfahren (600) nach Anspruch 1, umfassend:
Verarbeiten (615) einer Anmeldung eines Benutzers.

3. Verfahren (600) nach Anspruch 1 oder 2, wobei der reduzierte Zustand (210) in einem serialisierten Datenformat empfangen wird und das Verfahren (600) den weiteren Schritt umfasst:
Deserialisieren (625) des reduzierten Zustands (210).

4. Computerprogrammprodukt (101') zum Wiederherstellen einer zustandsbehafteten bzw. -bezogenen Anwendungssitzung (200-S), wobei das Computerprogrammprodukt (101') eine Mehrzahl von Instruktionen umfasst, die Prozessoren (911) auf einem Server (901) oder dem Client (900) veranlassen, einen der Schritte der Ansprüche 1, 2 oder 3 auszuführen.

5. Computerprogrammprodukt (101') nach Anspruch 4, ferner umfassend:
einen Deserialisierer (101-2') mit einer Mehrzahl von Instruktionen, die einen Prozessor (911) des Servers (901) veranlassen, den reduzierten Zusand (210) zu deserialisieren (625), wenn er von dem Client (900) empfangen (620) wird.

6. Computersystem zum Wiederherstellen einer zustandsbehafteten bzw. -bezogenen Anwendungssitzung (200-S), wobei das Computersystem einen Server (901) und einen Client (900) umfasst;
wobei der Client ein Computerprogramm ausführt zum
Speichern eines reduzierten Zustands der zustandsbehafteten Anwendungssitzung (200-S) auf einem Client (900), wobei der reduzierte Zustand ein Teil eines kompletten Zustands einer Anwendungssitzung ist, der es erlaubt, den kompletten Zustand der Anwendungssitzung wiederherzustellen; und
Speichern des reduzierten Zustands (210) als einen Teil des zustandsbehafteten Favoriten (250) auf dem Client (900);
wobei der Server ein Computerprogramm (101') ausführt, um die folgenden Schritte durchzuführen:
Instanziieren (610), auf dem Server (901), der zustandsbehafteten Anwendungssitzung (200-S), die dem zustandbehafteten bzw. -bezogenen Favoriten (250) auf einem Client (900) entspricht;
Empfangen (620), von dem Web-Browser, der auf dem Client läuft, auf dem Server (901) des reduzierten Zustands (210) der zustandsbehafteten Anwendungssitzung (200-S);
Extrahieren des reduzierten Zustands aus einem kompletten Zustand, der auf dem Server gespeichert ist, wobei das Extrahieren die Auswahl von relevanten Daten des kompletten Zustands unter Verwendung eines Zustandsextraktors beinhaltet, der Informationen über das Programmiermodell der Anwendung aufweist, so dass er weiß, welche Informationen eines kompletten Zustands eines spezifischen Anwendungsbildschirms wesentlich sind, um die spezifische Anwendungssitzung zu einem späteren Zeitpunkt wiederherzustellen; und
Erweitern (630) des reduzierten Zustands (210) auf den kompletten Zustand (220) der zustandsbehafteten Anwendungssitzung (200-S).

7. Computersystem nach Anspruch 6, wobei der Server (901) das Computerprogramm (101') ausführt, um die folgenden Schritte durchzuführen:
Verarbeiten (615) einer Anmeldung eines Benutzers.

8. Computersystem nach Anspruch 6, wobei der reduzierte Zustand (210) in einem serialisierten Datenformat empfangen wird und der Server (901), wenn er das Computerprogramm (101') ausführt, die weiteren Schritte durchführt:
Deserialisieren (625) des reduzierten Zustands (210).

## Revendications

1. Procédé (600) pour restaurer une session d'application à état (200-S) sur un serveur (901) comprenant :
stocker un état réduit de la session d'application à état (200-S) sur un client (900), l'état réduit étant une portion d'un état complet d'une session d'application qui permet de restaurer l'état complet de la session d'application ;
instancier (610) sur le serveur (901) la session d'application à état (200-S) qui correspond à un favori à état (250) administré sur un client (900) ;
envoyer une demande d'un état réduit (210) à partir d'un navigateur Web tournant sur le client (900) au serveur (901) ;
recevoir (620) du navigateur Web tournant sur le client l'état réduit (210) de la session d'application à état (200-S) sur le serveur (901) ;
étendre (630) l'état réduit (210) au niveau du serveur (901) à l'état complet (220) de la session d'application à état (200-S) ;
extraire l'état réduit (210) au niveau du serveur (901) d'un état complet stocké sur le serveur, dans lequel l'extraction inclut la sélection de données pertinentes de l'état complet en utilisant un extracteur d'état qui a des informations concernant le modèle de programmation d'application de sorte qu'il sait quelles informations d'un état complet d'un écran d'application spécifique sont essentielles pour restaurer la session d'application spécifique à un point ultérieur dans le temps ; et
stocker l'état réduit (210) comme portion du favori à état (250) sur le client (900).

2. Procédé (600) selon la revendication 1, comprenant :
traiter (615) une ouverture de session d'un utilisateur.

3. Procédé (600) selon la revendication 1 ou 2, dans lequel l'état réduit (210) est reçu dans un format de données sérialisé et le procédé (600) comprend l'étape supplémentaire :
désérialiser (625) l'état réduit (210).

4. Produit de programme informatique (101') pour restaurer une session d'application à état (200-S), dans lequel le produit de programme informatique (101') comprend une pluralité d'instructions amenant des processeurs (911) d'un serveur (901) ou le client (900) à exécuter l'une quelconque des étapes des revendications 1, 2 ou 3.

5. Produit de programme informatique (101') selon la revendication 4, comprenant en outre :
un désérialiseur (101-2') ayant une pluralité d'instructions amenant un processeur (911) du serveur (901) à désérialiser (625) l'état réduit (210) lors de sa réception (620) du client (900).

6. Système informatique pour restaurer une session d'application à état (200-S), ledit système informatique comprenant un serveur (901) et un client (900) ;
le client faisant tourner un programme informatique pour stocker un état réduit de la session d'application à état (200-S) sur le client (900), l'état réduit étant une portion d'un état complet d'une session d'application qui permet de restaurer l'état complet de la session d'application ; et
stocker l'état réduit (210) comme portion d'un favori à état (250) sur le client (900) ;
le serveur faisant tourner un programme informatique (101') pour exécuter les étapes suivantes :
instancier (610) sur le serveur (901) la session d'application à état (200-S) qui correspond au favori à état (250) sur un client (900) ;
recevoir (620) du navigateur Web tournant sur le client l'état réduit (210) de la session d'application à état (200-S) sur le serveur (901) ;
extraire l'état réduit d'un état complet stocké sur le serveur, dans lequel l'extraction inclut la sélection de données pertinentes de l'état complet en utilisant un extracteur d'état qui a des informations concernant le modèle de programmation d'application de sorte qu'il sait quelles informations d'un état complet d'un écran d'application spécifique sont essentielles pour restaurer la session d'application spécifique à un point ultérieur dans le temps ; et
étendre (630) l'état réduit (210) à un état complet (220) de la session d'application à état (200-S).

7. Système informatique selon la revendication 6, dans lequel ledit serveur (901) fait tourner le programme informatique (101') pour exécuter l'étape supplémentaire :
traiter (615) une ouverture de session d'un utilisateur.

8. Système informatique selon la revendication 6, dans lequel l'état réduit (210) est reçu dans un format de données sérialisé et le serveur (901) exécute l'étape supplémentaire lorsqu'il fait tourner le programme informatique (101') :
désérialiser (625) l'état réduit (210).
